Europäisches Patentamt

European Patent Office

Office européen des brevets

(19)

(11) Publication number: **0 106 607**
**A2**

# (12) EUROPEAN PATENT APPLICATION

(21) Application number: **83305937.1**

(22) Date of filing: **30.09.83**

(51) Int. Cl.³: **G 03 H 1/04**

(30) Priority: **15.10.82 GB 8229577**

(43) Date of publication of application:
**25.04.84 Bulletin 84/17**

(84) Designated Contracting States:
**AT BE CH DE FR GB IT LI LU NL SE**

(71) Applicant: **APPLIED HOLOGRAPHICS PUBLIC LIMITED COMPANY**
**1 Hyde Park Place**
**London W2 2LH(GB)**

(72) Inventor: **Shearer, James Alexander**
**Braxted Park Witham**
**Essex CM8 3XB(GB)**

(74) Representative: **Wisher, Michael Frederick et al,**
**Urquhart-Dykes & Lord 47 Marylebone Lane**
**London W1M 6DL(GB)**

(54) **Method of and apparatus for producing holograms.**

(57) A method of and apparatus for producing holographs in which a pulsed laser is used emitting a pulse duration of between 8 and 350 nanoseconds and intermittently or continuously moving a film of laser light sensitive material passed an aperture through which the laser light passes so that a subject which may be an object or preferably a subject hologram located adjacent the aperture may produce holograms on successive portions of the film.

FIG.6.

EP 0 106 607 A2

0106607

## TITLE

Improvements in holography.

## INTRODUCTION

This invention relates to improvements in holography.

The production of holographs, particularly for sale in the artistic market, is known. The standard production technique is to irradiate a subject and a laser light-sensitive plate with laser light and interference between the reference wave and the wave from the subject produces a hologram in the plate. The presently used technique is quite successful but is time consuming and manipulation of the individual plates is necessary. Such technique is not well adapted for the commercial production of holographs in which high volume, high quality holographs are required.

## OBJECT OF THE INVENTION

It is the main object of this invention to provide a method of and apparatus for producing holographs which is well suited to their commercial production.

## STATEMENTS OF INVENTION

According to the present invention there is provided a method of producing holographs of a subject on laser light-sensitive film which includes irradiating the subject and the film with pulsed laser light and moving the film in the vicinity of the subject to produce a plurality of holographs on successive portions of the film.

The invention also includes apparatus for carrying out the above method , including a source of pulsed laser light and means for collimating the laser light or for providing diverging or converging laser light, laser light sensitive film feed means including a first spool for storing a reel of unexposed laser light sensitive film, guide means for guiding the film from the first spool passed an aperture through which the collimated or diverging or converging laser light passes, a second spool for receiving the exposed length of film and means for moving the film passed the aperture in synchronism with the emission of pulses from the laser to expose successive portions of the film.

DRAWINGS

Figure 1 is an optical diagram of one layout for carrying out the method of the invention;

Figure 2 is an optical diagram of a further typical layout for carrying out the method of the invention, this layout being preferred to the layout of Figure 1;

Figure 3 is a diagrammatic side elevation of apparatus constructed in accordance with the invention for producing holographs;

Figure 4 is a side elevation of part of the apparatus in accordance with the invention;

Figure 5 is a front elevation of the apparatus of Figure 4;

Figure 6 is a side elevation of part of the apparatus shown in Figure 4 on a larger scale;

Figure 7 is a front elevation of the apparatus of Figure 6;

Figure 8 is a side elevation of part of the apparatus shown in Figure 4;

Figure 9 is a plan view of the apparatus shown in Figure 8;

Figure 10 is a view on the line X-X of Figure 8; and

Figure 11 is a view in the direction of arrow XI of Figure 8.

## SPECIFIC EMBODIMENTS

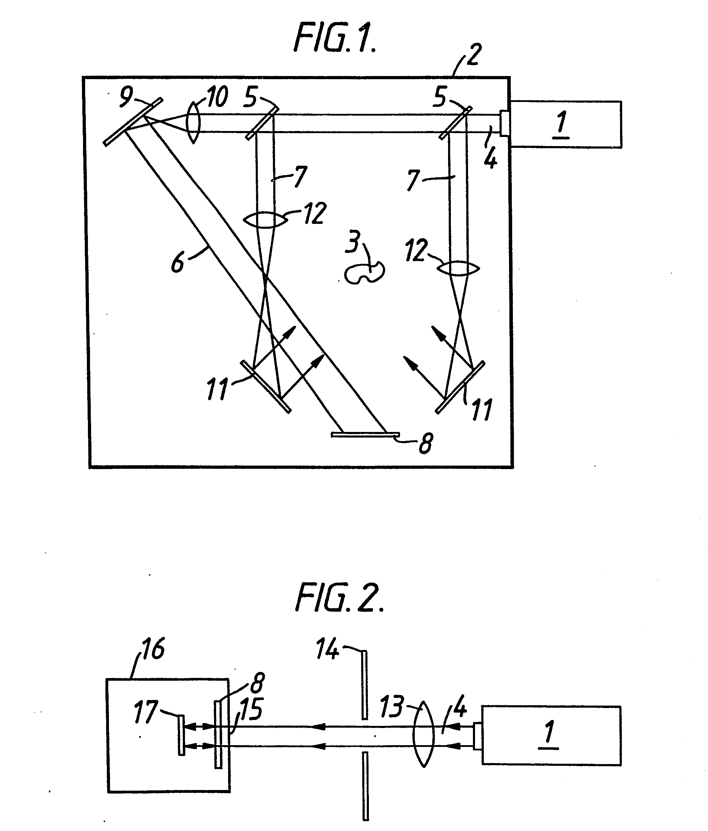

Referring first to Figure 1, it should be emphasised that the optical arrangment illustrated is only one of very many optical layouts which may be used for producing high quality reflection or transmission holographs in accordance with the invention. In this typical layout a pulsed laser 1 (typically a J K Lasers Holographic Ruby Pulse laser, Model HS-1/L/2/60, having a pulse rate of one pulse per second and a pulse duration of 50 nanoseconds) beams laser light into an enclosure 2 in which a subject 3 may be located. The beam 4 of the laser light is split by the two semi-transparent mirrors 5 into a reference beam 6 and object beams 7. The reference beam 6 is directed onto a laser light sensitive film 8 by a wholly reflecting mirror 9 through lens 10 and the object beams 7 are directed towards the subject 3 by wholly reflecting mirrors 11 through lenses 12. Thus the laser light sensitive film 8 will be irradiated by reference waves 6 and light reflected from the subject 3 thus forming the hologram in the film 8.

Referring now to Figure 2 which shows a preferred typical layout of apparatus in accordance with the invention there is provided a pulsed laser 1 of the type mentioned in connection with Figure 1 which emits laser light 4 which is collimated through lens 13. Alternatively, the laser light may be diverging or converging. The collimated light then passes through mask 14, through an aperture 15 and into an enclosure 16 which houses a subject 17 which, in this case, may be subject hologram. A laser light sinsitive film 8 passes the aperture 15. It will be appreciated that this optical arrangement produces a reflection hologram in the light sensitive film. Equally, however, the arrangment may be such that the hologram produced is a transmission hologram.

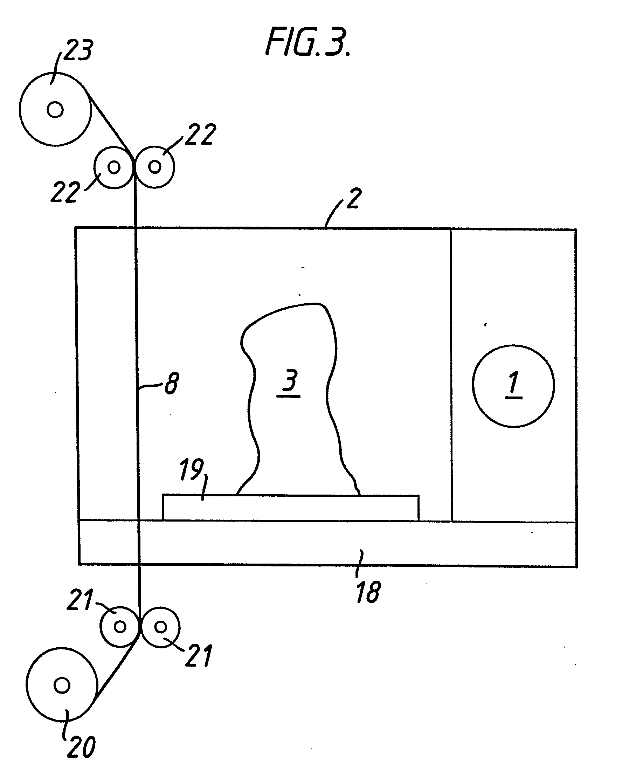

Figure 3 illustrates very diagrammatically a typical piece of apparatus for performing the method of the invention more particularly in accordance with the layout of Figure 1 but anyone skilled in the art will appreciate the optical differences between the layout of Figure 1 and Figure 2 and the illustration in Figure 3 is simply a guide of the manner in which the apparatus is used for performing the method of the invention.

The pulsed laser 1 and enclosure 2 together with the subject 3 are indicated in Figure 3. The apparatus also includes a pair of spaced runners 18 which carry a base 19 on which the subject 3 may be located. The base 19 is

- 5 -

moveable along runners 18 accurately to position the subject 3 in relation to the film 8. In this particular embodiment the film 8 is a continuous sheet (it may be discontinuous sheets) of laser light sensitive material initially wound on lower spool 20 so as to prevent the film being exposed. When exposure is to take place the film 8 is fed vertically upwardly (so as to prevent sag in the film) through one or more driven rollers 21 to a further pair of driven rollers 22 and thence to a further spool 23 to preserve the exposed film prior to developing.

The driven rollers 21 and 22 may be toothed to engage in perforations in the edges of the film 8 so that an accurate feed may be achieved. A suitable film is Agfa-Gevaert Holotest film 8E75HD and a feed rate of 30 to 40 centimeters per second may be achieved. This gives a square exposure area of 27cm sides per second although the usable area would be somewhat larger.

The exposed film will be developed and further processed in accordance with known techniques.

As already mentioned, instead of the subject being an object in the nature of object 3 the subject may be a hologram itself as indicated at 17 in Figure 2 and the invention finds particular application in the production of holographs from an original hologram.

A practical (rather than a theoretical) piece of apparatus in accordance with the invention and for carrying out the method of the invention is illustrated in Figures

- 6 -

4 to 11. These figures omit the pulsed laser and also the collimating and masking apparatus and any lenses which may be provided.

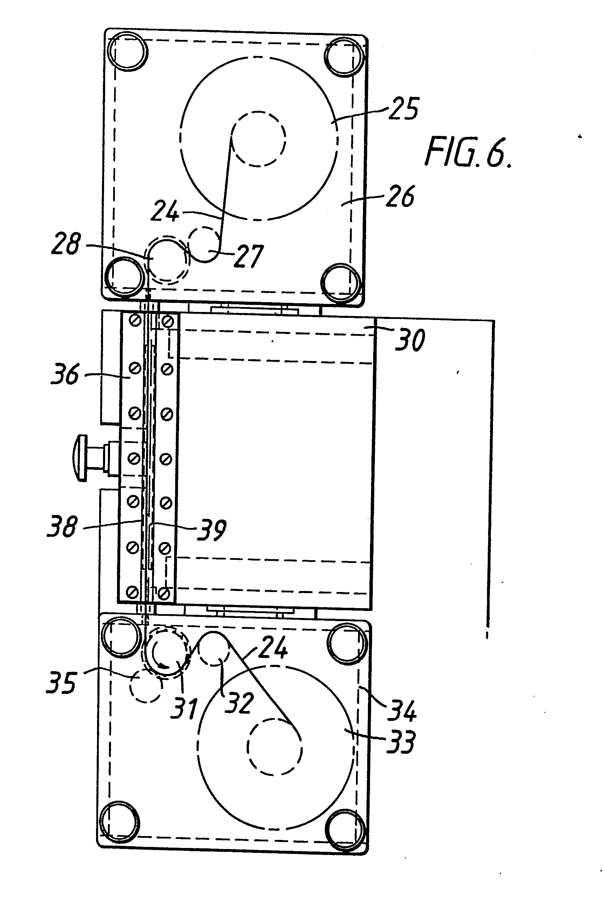

In this particular apparatus the laser light sensitive film 24 (see Figure 6) is fed from a storage reel 25 mounted within an upper box 26 over guide rollers 27 and 28 vertically downwards passed aperture 29 at one side of subject container 30 around driven sprocket 31 and guide roller 32 onto receiving reel 33. The reels 25 and 33 are obviously detachable for loading and unloading the film. Reel 33 is housed in lower box 34. So as to ensure that film 24 engages the teeth of sprocket wheel 31 a pressure roller 35 is provided.

The subject holder 30 has a hinged front panel 36 operated by knob 37 and panel 36 may be swung outwardly so that the film 24 may be fed between front and rear guides 38 and 39 respectively so that the film 24, as it passes the aperture 29, is accurately positioned in relation to a subject in subject container 30.

In order to move the laser light sensitive film 24 either continuously or intermittently passed aperture 29, feed mechanism is provided. This includes an electric motor 40 driving a pulley wheel 41 which, via belt 42, drives wheel 43. Pulley wheel 43 is mounted on shaft 44. Also mounted on shaft 44 is pulley wheel 45 which, via belt 46, drives pulley wheel 47 on shaft 48. All of this mechanism is mounted within frame 49 on the outside of

- 7 -

which is a pulley wheel 50 which drives via belt 51 pulley wheel 52 and hence shaft 53. The sprocket wheel 31 is mounted on shaft 53. The lower spool 33 is driven from shaft 53 through belt 54 and pulley 55.

Continuous drive may therefore be effected from motor 40 through the various pulley wheels to sprocket wheel 31 for the continuous feed of the film 24 passed aperture 29.

However, it may be desirable to have intermittent feed of the film 24 passed aperture 29. This intermittent feed may desirably either be manual or automatic. For manual intermittent feed a solenoid 56 is provided which on energisation attracts a rod 57 against a spring 58 and moves a lever 59 about a pivot 60 out of engagement with a stop 61 on wheel 62 mounted on shaft 44. Two or more such stops 61 may be provided as desired dependent upon the amount of rotation of wheel 62 which is desirable at each step. Control of the solenoid 56 may be from a remote point through standard mechanism which is not illustrated in the drawings.

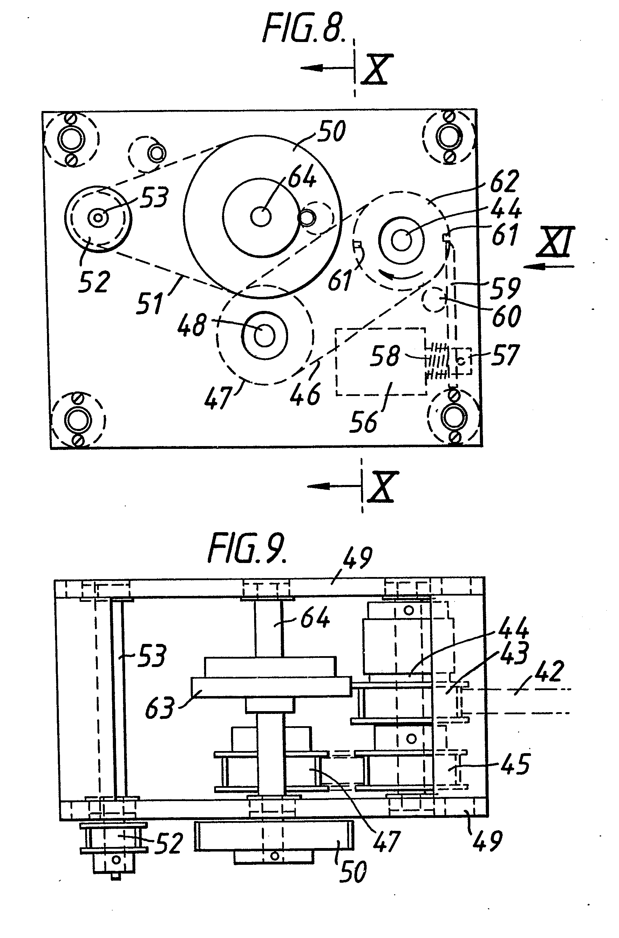

Instead of manual operation of the intermittent feed through solenoid 56 the feed may nevertheless be automatically intermittent by the provision of a Geneva Cross mechanism. The Geneva Cross wheel is provided at 63 mounted on shaft 64 (see Figure 9) and the co-operating pin-wheel 65 is mounted on shaft 48. Thus as the pin-wheel 65 is rotated at constant speed because of the

- 8 -

Geneva Cross mechanism the shaft 64 is rotated intermittently and hence the drive through pulley wheels 50 and 52 to shaft 53 and hence the sprocket wheel 31 is intermittent.

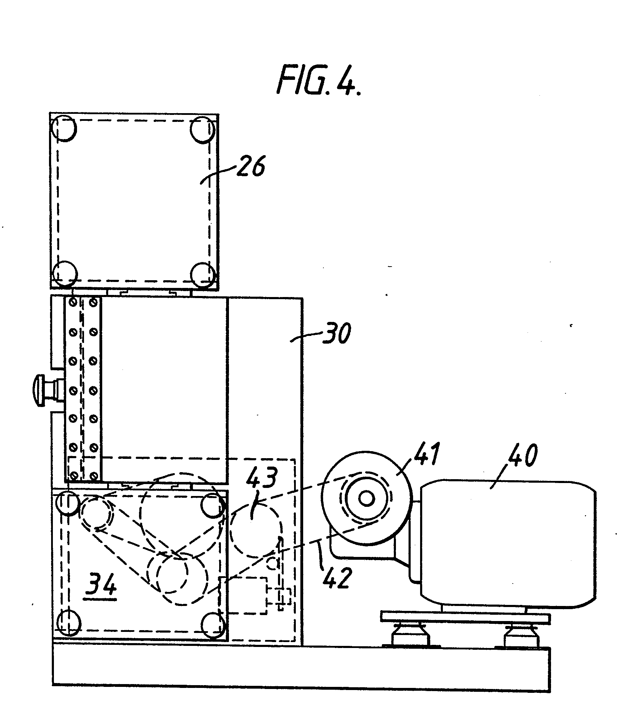

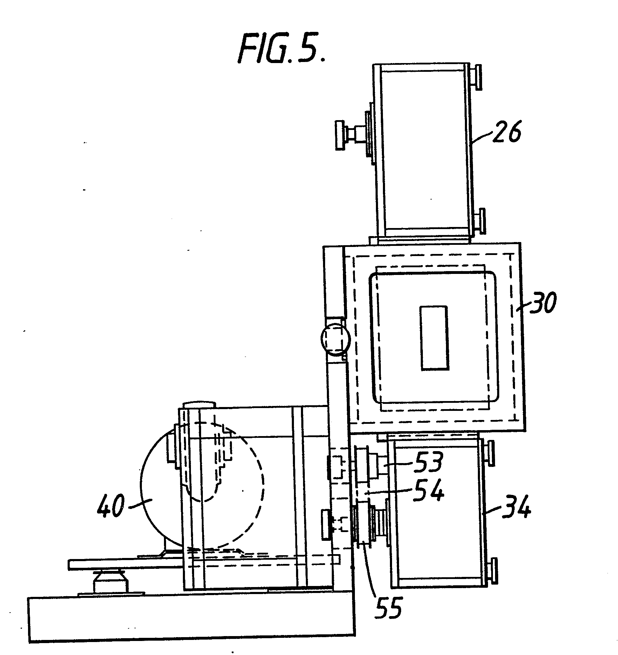

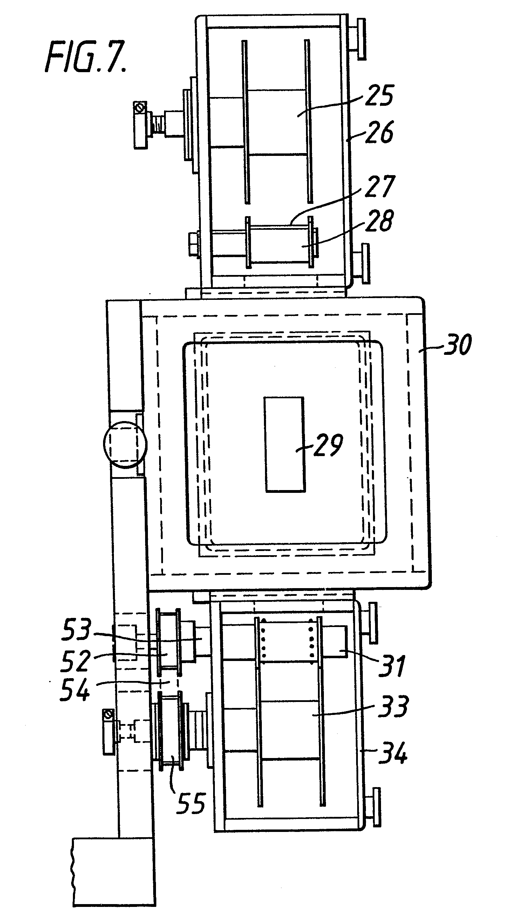

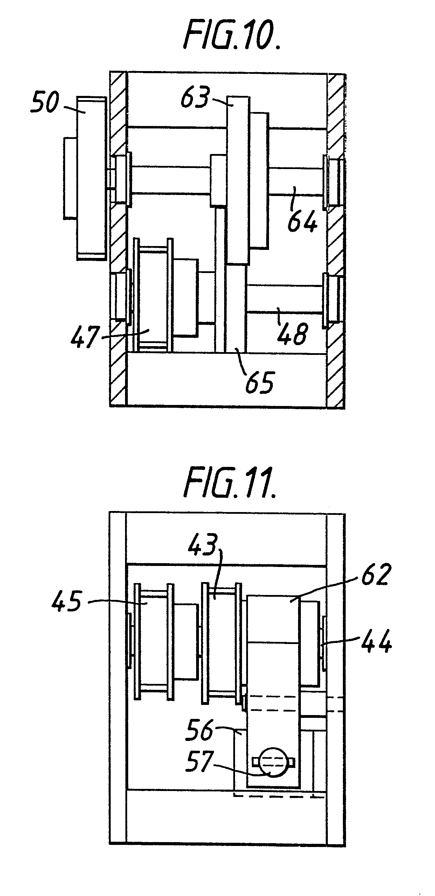

The apparatus described above in relation to Figures 4 to 11 operates in a similar manner to the mechanism previously described in relation to Figure 3.

CLAIMS

1. A method of producing holographs of a subject on laser light sensitive film which includes irradiating the subject and the film with pulsed laser light and moving the film in the vicinity of the subject to produce a plurality of holographs on successive portions of the film.

2. A method of producing holographs as claimed in Claim 1 in which the moving of the film is intermittent and synchronised with the pulsed emission of laser light so that the film is stationary when a pulse is emitted.

3. A method of producing holographs as claimed in Claim 1 in which the film is a continuous sheet of laser light sensitive material and the feed is continuous while the film is being exposed by pulsed laser light.

4. A method of producing holographs as claimed in any one of the preceding claims in which the subject is a hologram.

5. A method of producing holographs as claimed in any one of the preceding claims in which the pulse duration is between 8 and 350 nanoseconds.

6. A method of producing holographs as claimed in Claim 5 in which the pulse duration is about 50 nanoseconds.

7. Apparatus for carrying out the method as claimed in any one of the preceding claims including a source of pulsed laser light and means for collimating the laser light or for providing diverging or converging laser light, laser light sensitive film feed means including a first spool for storing a reel of unexposed laser light sensitive film, guide means for guiding the film from the first spool passed an aperture through which the laser light passes, a second spool for receiving the exposed length of film and means for moving the film passed the aperture in sychronism with the emission of pulses from the laser to expose successive portions of the film.

8. Apparatus as claimed in Claim 7 in which the guide means comprises a succession of rollers and spaced vertically disposed plates between which the film moves as it passes the aperture.

9. Apparatus as claimed in either Claim 7 or Claim 8 in which the means for moving the film comprises an electric motor driving a sprocket wheel around which the film passes, the drive being selectively continuous or intermittent through a Geneva Cross mechanism or a solenoid engergised in sychronism with the firing of the laser.

10. Apparatus for carrying out the method as claimed in any one of claims 1 to 6 substantially as herein described with reference to Figures 4 to 11 of the accompanying drawings.

# FIG.1.

# FIG.2.

# FIG.3.

FIG.4.

FIG.5.

FIG.6.

FIG.7.

FIG.8.

FIG.9.

## FIG.10.

## FIG.11.